# EUROPÄISCHE PATENTSCHRIFT

(11) **EP 2 528 362 B1**
(45) Veröffentlichungstag und Bekanntmachung des Hinweises auf die Patenterteilung: **04.07.2018**
(21) Anmeldenummer: 12168225.6
(22) Anmeldetag: 16.05.2012
(51) Int. Cl.: H04W 8/18, H04W 12/04

(54) **WECHSEL VON SUBSKRIPTIONSDATEN IN EINEM IDENTIFIZIERUNGSMODUL**
CHANGE OF SUBSCRIPTION DATA IN AN IDENTIFICATION MODULE
CHANGEMENT DE DONNÉES DE SOUSCRIPTION DANS UN MODULE D'IDENTIFICATION

(30) Priorität: 24.05.2011 DE 102011076414
(43) Veröffentlichungstag der Anmeldung: 28.11.2012
(73) Patentinhaber: Vodafone Holding GmbH, 40213 Düsseldorf (DE)
(72) Erfinder: Jacobs, Holger, 42349 Wuppertal (DE); Rüdinger, Jens, 40233 Düsseldorf (DE)
(74) Vertreter: Jostarndt Patentanwalts-AG

(56) Entgegenhaltungen:
- GB-A- 2 473 753
- "Embedded SIM Task Force Requirements and Use Cases", , 21. Februar 2011 (2011-02-21), XP055124614, Gefunden im Internet: URL:http://ftp.3gpp2.org/TSGS/Incoming/WG4 /2011_08_25CC/Remanded/S00-20110725-013A__ Embedded SIM Use Cases and Reqts v1 0 CLEAN.PDF [gefunden am 2014-06-23]

## Beschreibung

Die Erfindung befasst sich mit dem Wechsel von aktiven Subskriptionsdaten in einem Identifizierungsmodul zur Verwendung in einem Mobilfunknetz. Insbesondere betrifft die Erfindung ein Verfahren zum Wechsel von aktiven Subskriptionsdaten in einem Identifizierungsmodul zur Verwendung in einem Mobilfunkendgerät und ein Identifizierungsmodul, das zur Ausführung des Verfahrens eingesetzt werden kann.

Für den Zugriff auf Mobilfunknetze und die darin bereitgestellten Mobilfunkdienste müssen Teilnehmer bei einem Mobilfunkbetreiber in einem Mobilfunknetz registriert sein, das auch als Heimatnetz des Teilnehmers bezeichnet wird. Aufgrund der Registrierung kann sich der Teilnehmer in das Heimatnetz einbuchen und die mit dem Anbieter zuvor vereinbarten Mobilfunkdienste des Heimatnetzes zu den mit dem Anbieter vereinbarten Mobilfunktarifen nutzen. Ein Zugriff auf Mobilfunknetze anderer Anbieter ist unter Rückgriff auf die Registrierung im Heimatnetz grundsätzlich ebenfalls möglich. Ein solcher Zugriff, der auch als Roaming bezeichnet wird, ist jedoch regelmäßig mit höheren Kosten für die Nutzung von Diensten verbunden und oftmals nur für eine eingeschränkte Auswahl von Mobilfunkdiensten möglich. Daher passen Mobilfunkteilnehmer in der Regel ihr Heimatnetz sorgfältig an ihr Nutzungsverhalten an und wählen beispielsweise ein Heimatnetz, auf das in dem geografischen Gebiet, in dem der Teilnehmer Mobilfunkdienste nutzt, ohne Roaming zugegriffen werden kann und/oder in dem von ihm am häufigsten genutzte Mobilfunkdienste zu günstigen Tarifen angeboten werden. Bei einer Veränderung des Nutzungsverhaltens, beispielsweise bei einem Wechsel in ein anderes geografische Gebiet, in dem das ursprüngliche Heimatnetz nicht mehr verfügbar ist, kann zudem ein Wechsel des Heimatnetzes gewünscht sein - insbesondere um ein kostentreibendes Roaming zu vermeiden.

Infolge der Registrierung in einem Heimatnetz erhält der Teilnehmer Subskriptionsdaten von dem Mobilfunkanbieter, die zur Identifizierung und Authentisierung herangezogen werden, wenn sich der Teilnehmer mit einem Mobilfunkendgerät in das Heimatnetz oder ein anderes Mobilfunknetz einbucht. Die Subskriptionsdaten umfassen in der Regel wenigstens eine dem Teilnehmer zugeordnete Kennung, insbesondere eine IMSI (International Mobile Subscriber Identity) und einen geheimen Schlüssel, der zur Authentisierung des Teilnehmers eingesetzt wird. Die Subskriptionsdaten werden üblicherweise in einer Einrichtung gespeichert, die hierin als Identifizierungsmodul bezeichnet wird und bei der es sich üblicherweise um einen gesicherten Chip handelt, der mit dem Mobilfunkendgerät des Teilnehmers verbunden wird. Das Identifizierungsmodul kann in einer Chipkarte enthalten sein, die in das Mobilfunkendgerät eingesetzt wird und etwa als SIM (Subscriber Identity Module)-Karte ausgeführt sein kann. Eine solche Chipkarte kommt in der Regel bei Verwendung von Mobiltelefonen, Smartphones, Notebookcomputern oder ähnlichen Mobilfunkendgeräten zum Einsatz. Gleichfalls kann das Identifizierungsmodul fest in das Mobilfunkendgerät integriert sein, wie es teilweise etwa bei so genannten M2M ("machine-to-machine")- bzw. Telematikgeräten vorgesehen ist, die in der Regel einfacher aufgebaut sind als Endgeräte der zuvor genannten Art.

Die Verknüpfung eines Identifizierungsmoduls mit einem Heimatnetz und die damit verbundene Installation von Subskriptionsdaten in dem Identifizierungsmodul wird bei konventionellen Identifizierungsmodulen im Rahmen der Konfiguration der Identifizierungsmodule bei dem Betreiber des Heimatnetzes oder dem Lieferanten des Identifizierungsmoduls vorgenommen, bevor das Identifizierungsmodul an den Teilnehmer ausgegeben wird. Nach der Ausgabe kann das Identifizierungsmodul dann nicht mehr mit einem anderen Heimatnetz verknüpft werden. Wenn der Teilnehmer das Heimatnetz wechseln möchte, muss ein solches konventionelles Identifizierungsmodul daher ausgewechselt werden. Ein derartiger Wechsel ist jedoch zumindest mit einem hohen logistischen Aufwand verbunden, der bei der Bereitstellung eines neuen Identifizierungsmoduls entsteht. Bei einem Identifizierungsmodul, das fest in ein Mobilfunkendgerät integriert ist, entsteht ein noch höherer Aufwand, da das Identifizierungsmodul nicht ohne Weiteres durch ein anderes ersetzt werden kann, so dass ein Austausch des vollständigen Endgeräts bei einem Wechsel des Heimatnetzes oftmals sogar wirtschaftlicher ist.

Um den Wechsel des Heimatnetzes bzw. Mobilfunkanbieters zu vereinfachen, schlägt die GB 2 378 094 A ein Verfahren vor, bei dem ein Identifizierungsmodul nach der Ausgabe durch einen Fernzugriff über ein Mobilfunknetz - d.h. über die Luftschnittstelle - mit einem neuen Heimatnetz verknüpft werden kann. Dabei wird ein Teil der Subskriptionsdaten für verschiedene Anbieter bereits vorab in dem Identifizierungsmodul gespeichert und ein zentrales Verwaltungscenter kann die Subskriptionsdaten mittels einer an das Identifizierungsmodul gesendeten Nachricht aktivieren, wenn das Identifizierungsmodul im Heimatnetz eines bestimmten Anbieters registriert werden soll. Somit kann eine Neuausgabe eines Identifizierungsmoduls beim Wechsel des Mobilfunkanbieters vermieden werden.

Das Dokument "Embedded SIM Task Force Requirement and Use Cases 1.0" vom 21. Februar 2011 offenbart Anwendungsfälle für fortgeschrittenes Management von UICC/SIM Karten, die in einem Kommunikationsgerät eingebettet sind.

Bei dem bekannten Verfahren besteht jedoch das Problem, dass für einen sicheren Wechsel der aktiven Subskriptionsdaten ein vertrauenswürdiges Verwaltungscenter eingerichtet werden muss, welches den Wechsel nicht nur steuert, sondern auch in sicherer Weise autorisiert. Andernfalls könnten Dritte ein Identifizierungsmodul zu unautorisierten Wechseln der aktiven Subskriptionsdaten veranlassen. Darüber hinaus besteht das Problem, dass nach der Initiierung des Wechsels der aktiven Subskriptionsdaten aufgrund eines Fehlers keine Einbuchung in ein Mobilfunknetz mehr möglich sein könnte. In einem solchen Fall wäre kein Fernzugriff auf das Identifizierungsmodul mehr möglich und das Identifizierungsmodul müsste in einer Servicestelle repariert bzw. neu konfiguriert oder durch ein neues Identifizierungsmodul ersetzt werden.

Es ist eine Aufgabe der vorliegenden Erfindung, einen sicheren Wechsel von aktiven Subskriptionsdaten in einem Identifizierungsmodul zu ermöglichen.

Die Aufgabe wird gelöst durch ein Verfahren nach Anspruch 1 und durch ein Identifizierungsmodul nach Anspruch 9. In den übrigen Ansprüchen sind Ausgestaltungen des Verfahrens und des Identifizierungsmoduls angegeben.

Gemäß einem ersten Aspekt der Erfindung wird ein Verfahren zum Wechsel von aktiven Subskriptionsdaten in einem Identifizierungsmodul vorgeschlagen. Das Identifizierungsmodul ist zur Verwendung in einem Mobilfunkendgerät vorgesehen, das mit einem Mobilfunknetz verbunden werden kann. In dem Verfahren kehrt das Identifizierungsmodul nach einer Aktivierung von neuen Subskriptionsdaten selbsttätig zur Aktivierung von vor dem Wechsel bereits aktivierten alten Subskriptionsdaten zurück, wenn nach der Aktivierung der neuen Subskriptionsdaten wenigstens ein vorgegebenes Ereignis nicht in dem Identifizierungsmodul erfasst wird.

Gemäß einem weiteren Aspekt schlägt die Erfindung ein Identifizierungsmodul zur Verwendung in einem Mobilfunkendgerät vor, das mit einem Mobilfunknetz verbunden werden kann. Das Identifizierungsmodul ist dazu eingerichtet, aktive Subskriptionsdaten zu wechseln und wenigstens ein vorgegebenes Ereignis zu erfassen. Weiterhin ist das Identifizierungsmodul dazu eingerichtet, nach einer Aktivierung von neuen Subskriptionsdaten selbsttätig zu der Aktivierung von vor dem Wechsel bereits aktivierten alten Subskriptionsdaten zurückzukehren, wenn das Ereignis nach der Aktivierung der neuen Subskriptionsdaten nicht erfasst wird.

Das Ereignis besteht dabei sowohl im Falle des Verfahrens als auch des Identifizierungsmoduls darin, dass keine Bestätigungsnachricht mit einer Bestätigung des Wechsels der aktiven Subskriptionsdaten von einem mit den alten Subskriptionsdaten verknüpften alten Anbieter zu erhalten. Die Bestätigungsnachricht umfasst dabei wenigstens ein dem alten Anbieter zugeordnetes Authentisierungsmerkmal, das von dem Identifizierungsmodul geprüft wird.

Mit der Möglichkeit zur selbsttätigen Rückkehr zur Aktivierung der alten Subskriptionsdaten schafft die Erfindung einen Mechanismus zur Absicherung eines Wechsels von aktiven Subskriptionsdaten. Die selbsttätige Rückkehr erfolgt insbesondere ohne einen externen Befehl, so dass sie auch dann erfolgen kann, wenn eine Einbuchung in ein Mobilfunknetz mit den neuen Subskriptionsdaten fehlschlägt. Darüber hinaus kann beispielsweise die endgültige Aktivierung der neuen Subskriptionsdaten von einer Bestätigung des alten Anbieters abhängig gemacht werden, und das Identifizierungsmodul kann beim Ausbleiben der Bestätigung zu den alten Subskriptionsdaten dieses Anbieters zurückkehren. Darüber hinaus wird für den Wechsel der Subskriptionsdaten nicht zwingend eine zentrale Einheit im Mobilfunknetz benötigt. Hierdurch wird der Wechsel der Subskriptionsdaten vereinfacht.

Die Subskriptionsdaten sind jeweils mit einem Mobilfunkanbieter bzw. einem Heimatnetz verknüpft. Bei einem Wechsel der aktiven Subskriptionsdaten werden aktive erste Subskriptionsdaten durch aktive zweite Subskriptionsdaten ersetzt. Hierzu werden die zweiten Subskriptionsdaten aktiviert, und die zuvor verwendeten ersten Subskriptionsdaten werden deaktiviert. Um zu der Aktivierung der ersten Subskriptionsdaten zurückzukehren, wird der Wechsel rückgängig gemacht, indem die ersten Subskriptionsdaten wieder aktiviert und die zweiten Subskriptionsdaten deaktiviert werden.

Unter aktiven Subskriptionsdaten werden vorliegend insbesondere Subskriptionsdaten verstanden, die in dem Identifizierungsmodul gespeichert sind und zur Verwendung vorgesehen sind, während nicht-aktive Subskriptionsdaten nicht zur Verwendung vorgesehen sind. Nach einer Deaktivierung können Subskriptionsdaten vorzugsweise in dem Identifizierungsmodul gespeichert bleiben, insbesondere um eine Rückkehr zur Aktivierung dieser Subskriptionsdaten zu ermöglichen. Grundsätzlich können Subskriptionsdaten nach der Deaktivierung jedoch auch gelöscht werden, wenn sie nicht mehr benötigt werden. So kann beispielsweise vorgesehen sein, dass nach der Rückkehr zu den alten Subskriptionsdaten die neuen Subskriptionsdaten gelöscht werden.

Bei dem vorgegebenen Ereignis kann es sich zusätzlich um die erfolgreiche Einbuchung des Mobilfunkendgeräts in ein Mobilfunknetz unter Verwendung der neuen Subskriptionsdaten handeln. Diesbezüglich beinhaltet eine Ausgestaltung des Verfahrens und des Identifizierungsmoduls, dass das Identifizierungsmodul zu der Aktivierung der alten Subskriptionsdaten zurückkehrt, wenn das Identifizierungsmodul nach der Aktivierung der neuen Subskriptionsdaten nicht feststellt, dass das Mobilfunkendgerät unter Verwendung der neuen Subskriptionsdaten in ein Mobilfunknetz eingebucht ist. Hierdurch wird eine Möglichkeit zur selbsttätigen Rückkehr zur Aktivierung der alten Subskriptionsdaten geschaffen, falls die Einbuchung in ein Mobilfunknetz unter Verwendung der neuen Subskriptionsdaten fehlschlägt. Mit den alten Subskriptionsdaten, die zuvor bereits bei der Einbuchung in ein Mobilfunknetz verwendet worden sind, kann das Mobilfunkendgerät nach der Rückkehr in der Regel erneut mit einem Mobilfunknetz verbunden werden - insbesondere bei einem Fehlschlag aufgrund von netzseitigen Problemen. Damit wird mit der Rückkehr zur Aktivierung der alten Subskriptionsdaten sichergestellt, dass auch nach einem Fehlschlag der Einbuchung unter Verwendung der neuen Subskriptionsdaten weiterhin ein Fernzugriff auf das Identifizierungsmodul möglich ist.

Die Vorgabe des Ereignisses, dessen Nichterfassung zu einer Rückkehr zu den alten Subskriptionsdaten führt umfasst vorzugsweise zusätzlich auch die Vorgabe einer Zeitspanne innerhalb derer oder eines weiteren Ereignisses bis zu dem das vorgegebenen Ereignisse erfasst werden soll. Die Rückkehr zu der Aktivierung der alten Subskriptionsdaten erfolgt in einer entsprechend Ausführungsform des Verfahrens und des Identifizierungsmoduls, wenn das vorgegebenen Ereignis nicht innerhalb einer aufgrund der Aktivierung in Lauf gesetzten Zeitspanne und/oder bis zum Erfassen eines weiteren vorgegebenen Ereignisses erfasst wird. Die Zeitspanne wird vorzugsweise derart gewählt, dass mit hoher Sicherheit von einem Fehler auszugehen ist, wenn eine erfolgreiche Einbuchung in ein Mobilfunknetz innerhalb der Zeitspanne nicht festgestellt werden kann. Als Ereignis kann grundsätzlich jedes beliebige Ereignis zugrunde gelegt werden, das in dem Identifizierungsmodul oder in dem Endgerät erfassbar ist. Beispiele für derartige Ereignisse sind der Wechsel in eine andere Zelle des Mobilfunknetzes und eine Eingabe des Nutzers.

Zudem beinhaltet eine Ausgestaltung des Verfahrens und des Identifizierungsmoduls, dass das Identifizierungsmodul die Feststellung, dass das Mobilfunkendgerät unter Verwendung der neuen Subskriptionsdaten in ein Mobilfunknetz eingebucht ist, aufgrund des Empfangs einer infolge des Einbuchens gesendeten Nachricht trifft. Die Nachricht kann beispielsweise von einer Netzeinrichtung des mit den neuen Subskriptionsdaten verknüpften Heimatnetzes gesendet werden.

Das Ereignis, dessen Nichterfassung zu einer selbsttätigen Rückkehr des Identifizierungsmoduls zur Aktivierung der alten Subskriptionsdaten führt, umfasst den Erhalt einer Bestätigungsnachricht mit einer Bestätigung des Wechsels der aktiven Subskriptionsdaten von einem mit den alten Subskriptionsdaten verknüpften alten Anbieter. Das Identifizierungsmodul kehrt zu der Aktivierung der alten Subskriptionsdaten zurück, wenn das Identifizierungsmodul nach der Aktivierung der neuen Subskriptionsdaten keine solche Bestätigungsnachricht erhält. Hierdurch wird verhindert, dass ein Wechsel der aktiven Subskriptionsdaten ohne Zustimmung des mit den alten Subskriptionsdaten verknüpften alten Anbieters vorgenommen werden kann.

Die Bestätigungsnachricht umfasst in einer Weiterbildung des Verfahrens und des Identifizierungsmoduls wenigstens ein dem alten Anbieter zugeordnetes Authentisierungsmerkmal, das von dem Identifizierungsmodul geprüft wird. Eine Rückkehr zu den alten Subskriptionsdaten ist in dieser Ausführungsform vorzugsweise auch dann vorgesehen, wenn die Bestätigungsnachricht zwar erhalten wird, die Prüfung des Authentisierungsmerkmals jedoch nicht erfolgreich ist. Hierdurch wird verhindert, dass die Bestätigungsnachricht von einem Dritten gefälscht werden kann.

Eine weitere Ausgestaltung des Verfahrens und des Identifizierungsmoduls sieht vor, dass das Identifizierungsmodul dem alten Anbieter den Wechsel der aktiven Subskriptionsdaten meldet und die Bestätigungsnachricht aufgrund dieser Meldung an das Identifizierungsmodul übermittelt wird. Alternativ kann die Meldung jedoch auch von dem neuen Anbieter vorgenommen werden. Mittels einer gesonderten Meldung kann gewährleistet werden, dass der alte Anbieter über den Wechsel informiert wird, wenn der Vorgang ansonsten für ihn transparent durchgeführt wird. Wie die Bestätigungsnachricht kann die Meldung nach der erfolgreichen Einbuchung in ein Mobilfunknetz unter Verwendung der neuen Subskriptionsdaten über das Mobilfunknetz gesendet werden.

Eine weitere Ausführungsform des Verfahrens und des Identifizierungsmoduls sieht vor, dass die Rückkehr zu der Aktivierung der alten Subskriptionsdaten erfolgt, wenn die Bestätigungsnachricht nicht innerhalb einer Zeitspanne erhalten wird, die aufgrund der Übermittlung der Meldung an den alten Anbieter in Lauf gesetzt wird. Die Zeitspanne wird vorzugsweise so gewählt, dass der Empfang der Bestätigungsnachricht mit sehr hoher Wahrscheinlichkeit möglich wäre, wenn sie von dem alten Anbieter geschickt würde. Alternativ kann die Zeitspanne auch aufgrund einer erfolgreichen Einbuchung in ein Mobilfunknetz unter Verwendung der neuen Subskriptionsdaten in Lauf gesetzt werden. Zusätzlich oder alternativ kann auch in Bezug auf den Empfang der Bestätigungsnachricht ein Ereignis vorgegeben sein, und die Rückkehr zu den alten Subskriptionsdaten kann vorgesehen sein, wenn die Bestätigungsnachricht nicht bis zur Erfassung des Ereignisses erhalten wird. Beispiele für Ereignisse wurden zuvor bereits genannt.

Eine Weiterbildung des Verfahrens und des Identifizierungsmoduls zeichnet sich dadurch aus, dass das Identifizierungsmodul eine Bestätigungsmeldung an den alten Anbieter übermittelt, wenn aufgrund der Erfassung des vorgegebenen Ereignisses eine Aktivierung der neuen Subskriptionsdaten beibehalten wird. Aufgrund des Empfangs dieser Bestätigungsmeldung kann der alte Anbieter das Identifizierungsmodul aus seiner Teilnehmerdatenbank löschen, da keine selbsttätige Rückkehr zu den alten Subskriptionsdaten des alten Anbieters mehr erfolgt.

Die neuen Subskriptionsdaten werden in einer Ausführungsform des Verfahrens und des Identifizierungsmoduls innerhalb einer Nachricht mit einem Authentisierungsmerkmal des mit den neuen Subskriptionsdaten verknüpften neuen Anbieters an das Identifizierungsmodul übermittelt und nach Prüfung des Authentisierungsmerkmals in dem Identifizierungsmodul installiert. Auf diese Weise ist eine sichere Installation der neuen Subskriptionsdaten über einen Fernzugriff auf das Identifizierungsmodul möglich. Insbesondere müssen die Subskriptionsdaten in dieser Ausgestaltung nicht bereits bei der Herstellung bzw. ersten Konfiguration des Identifizierungsmoduls installiert werden.

Bei den Authentisierungsmerkmalen der zuvor genannten Nachrichten des alten und neuen Anbieters kann es sich um eine Verschlüsselung zumindest eines Teils der Nachrichten handeln. Dabei können Nutzdaten der Nachricht, wie etwa Meldungen, Befehle oder in der Nachricht enthaltene Subskriptionsdaten mit einem kryptographischen Schlüssel des jeweiligen Anbieters verschlüsselt sein, oder die Nachricht kann eine digitale Signatur des Anbieters enthalten, die üblicherweise ebenfalls mit einem Schlüssel des Anbieters verschlüsselt ist.

Zur Prüfung des Authentisierungsmerkmals kann in dem Identifizierungsmodul jeweils ein kryptographischer Schlüssel des Anbieters herangezogen werden. Diesbezüglich sieht eine Ausführungsform des Verfahrens und des Identifizierungsmoduls vor, dass das Identifizierungsmodul zur Prüfung des einem Anbieters zugeordneten Authentisierungsmerkmals einen Schlüssel heranzieht, der aus einer Mehrzahl von in dem Identifizierungsmodul hinterlegten, verschiedenen Anbietern zugeordneten geheimen Schlüssel ausgewählt wird. Hierdurch ist das Identifizierungsmodul dazu in der Lage, die Authentisierungsmerkmale mehrerer Anbieter anhand von voneinander unabhängigen kryptographischen Schlüsseln zu prüfen. Damit können verschiedene Anbieter jeweils eigene Authentisierungsmerkmale verwenden, wodurch die Sicherheit erhöht wird.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt
- Fig. 1: eine schematische Darstellung eines Mobilfunkendgeräts mit einem Identifizierungsmodul, das mit zwei verschiedenen Mobilfunkanbietern kommunizieren kann,und
- Fig. 2: ein Zustandsdiagramm mit verschiedenen Zuständen, die ein Identifizierungsmodul im Zusammenhang mit dem Wechsel des Anbieters einnehmen kann.

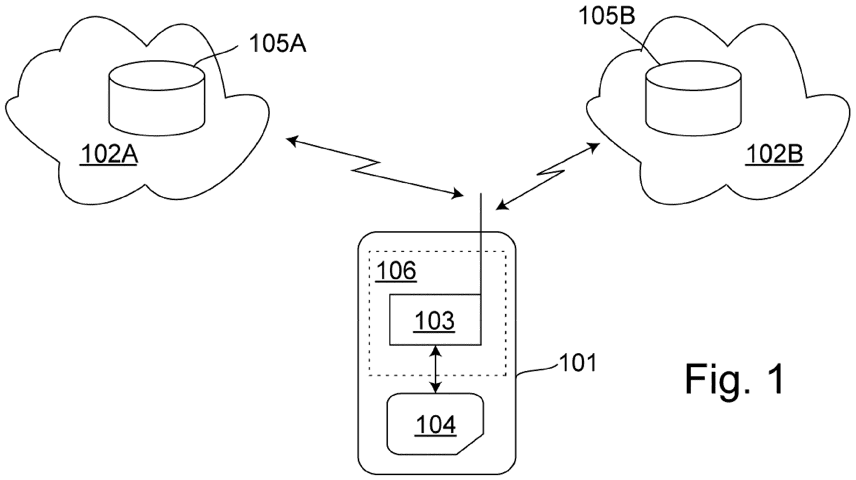

Die Fig. 1 zeigt in schematischer Darstellung ein Mobilfunkendgerät 101, mit dem drahtlos auf Mobilfunknetze 102i (i = A, B) zugegriffen werden kann. Beispielhaft sind in der Fig. 1 zwei Mobilfunknetze 102A, 102B dargestellt, die von unterschiedlichen Mobilfunkanbietern A und B betrieben werden.

Bei dem Mobilfunkendgerät 101 handelt es sich um ein elektronisches Kommunikationsgerät, das als mobiles oder stationäres Endgerät ausgestaltet sein kann. In einer Ausführungsform wird das Mobilfunkendgerät von einem Bediener für den Informationsaustausch bzw. -abruf über ein Mobilfunknetz 102i verwendet und stellt hierfür geeignete Bedienerschnittstellen, wie insbesondere geeignete Ein- und Ausgabemittel, bereit. In dieser Ausgestaltung kann das Mobilfunkendgerät 101 beispielsweise ein Mobiltelefon, ein Smartphone, ein Tablet- oder Notebookcomputer oder dergleichen sein. Gleichfalls kann es sich bei dem Mobilfunkendgerät 101 um ein M2M- oder Telematikgerät handeln, welches für den automatischen Informationsaustausch mit gleichartigen Geräten und/oder Leitstellen eingerichtet ist. Ein solches M2M-Gerät kann beispielsweise für die Fernüberwachung, -kontrolle und -wartung von Maschinen, Anlagen und anderen Systemen verwendet werden und hierzu über an den Verwendungszweck angepasste Überwachungssensoren und Steuerungsaktoren verfügen, die etwa per Mobilfunk ausgelesen und gesteuert werden können.

Das Mobilfunkendgerät 101 enthält ein Identifizierungsmodul 104 und ein Terminal 106. Der Zugriff des Mobilfunkendgeräts 101 auf ein Mobilfunknetz 102i erfolgt über ein Funkzugangsnetz, mit dem sich ein Funkmodul 103, das in dem Terminal enthalten ist, verbinden kann. Das Funkmodul 103 verfügt dazu über die erforderliche Funktechnik, beispielsweise eine Antenne mit zugehörigen Peripheriekomponenten, und über eine Steuereinrichtung zur Steuerung des Funkmoduls und zur Durchführung der für den Datenaustausch notwendigen Datenverarbeitung. Neben dem Funkmodul 103 umfasst das Terminal 106 weitere in der Figur nicht dargestellte Komponenten, wie beispielsweise einen oder mehreren Prozessoren zur Steuerung des Terminals 106 und zur Ausführung von weiteren Programmen, Speichereinheit zur Speicherung von Daten und Programmen, Ein- und Ausgabeeinrichtungen, und weitere Hard- und Softwarekomponenten zur Ausführung der von dem Terminal 106 bereitgestellten Funktionen.

Das Funkmodul 103 kann mit dem Identifizierungsmodul 104 verbunden werden, welches Daten und Prozesse bereitstellt, die für den Zugriff des Mobilfunkendgeräts 101 auf ein Mobilfunknetz 102i benötigt werden. Das Identifizierungsmodul 104 ist in einer Ausgestaltung ein Chip, der in einer Chipkarte enthalten ist, welche lösbar in einen Kartenleser des Terminals 106 eingesteckt werden kann. In dieser Ausgestaltung kann es sich bei dem Identifizierungsmodul 104 beispielsweise um eine SIM- oder USIM-Karte handeln, die für den Zugriff auf ein GSM (Global System for Mobile Communications)-, UMTS (Universal Mobile Telecommunications System)- oder LTE (Long Term Evolution)-Netz verwendet wird. Gleichfalls kann das Identifizierungsmodul 104 ein Chip sein, der fest in das Mobilfunkendgerät 101 integriert ist. Der Chip kann insbesondere auch als SIM- oder USIM-Chip ausgestaltet sein, d.h. als ein Chip für die Teilnehmeridentifizierung und -authentisierung in Mobilfunknetzen der zuvor genannten Art. Im Gegensatz zu einer Chipkarte benötigt ein solcher integrierter Chip keinen Kartenleser zur Verbindung mit dem Terminal 106 und kann daher vor allem in einfach konstruierten M2M-Geräten eingesetzt werden. In einer weiteren Ausführungsform ist das Identifizierungsmodul 104 nicht in einem separaten Chip integriert, sondern ist als ein abgesichertes Softwaremodul ausgestaltet, das zusammen mit weiterer Software auf einem Prozessor des Terminals 106 ausgeführt wird.

Die für den Zugriff auf ein Mobilfunknetz 102i erforderlichen Prozesse, die in dem Identifizierungsmodul 104 implementiert sein können, umfassen insbesondere einen Verschlüsselungsalgorithmus, der bei der Authentisierung des Identifizierungsmoduls 104 in einem Mobilfunknetz 102i eingesetzt wird. Mittels dieses Algorithmus und eines geheimen Schlüssels wird in einer Ausführungsform eine verschlüsselte Information generiert, die zur Authentisierung an das Mobilfunknetz 102i gesendet und in einem Authentisierungszentrum des Mobilfunknetzes 102i geprüft wird. Darüber hinaus können weitere in dem Identifizierungsmodul 104 hinterlegte Informationen des Anbieters bei der Ausführung des Algorithmus zu berücksichtigen sein, wie beispielsweise ein anbieterspezifischer Schlüssel, der für eine Mehrzahl von Identifizierungsmodulen 104 eines Anbieters übereinstimmt. Die für den Zugriff auf ein Mobilfunknetz 101 benötigten und in dem Identifizierungsmodul 104 hinterlegten Informationen umfassen Subskriptionsdaten Si, die zur Identifizierung und Authentisierung des Identifizierungsmoduls 104 bei der Einbuchung in ein Mobilfunknetz 102i verwendet werden. Die Subskriptionsdaten können den zuvor genannten geheimen Schlüssel und ggf. benötigte weitere Informationen zur Berechnung von Authentisierungsinformationen sowie eine dem Identifizierungsmodul 104 eindeutig zugeordnete Kennung beinhalten. Die Kennung, bei der es sich beispielsweise um eine IMSI handeln kann, wird zur Identifizierung des Identifizierungsmoduls 104 verwendet.

Neben den Subskriptionsdaten können in dem Identifizierungsmodul 104 weitere anbieterspezifische Parameter Xi gespeichert sein, die beim Zugriff auf ein Mobilfunknetz 102i herangezogen werden, die jedoch insbesondere nicht zur Identifizierung und/oder Authentisierung des Teilnehmers herangezogen werden. Beispiele für derartige Parameter sind Vorgaben für bevorzugte Mobilfunknetze 102i, die bei der Einbuchung des Mobilfunkendgeräts 101 in eine Mobilfunknetz 102i für die Netzauswahl herangezogen werden, sowie Parameter für den Zugriff auf einen oder mehrere Mobilfunkdienste, wie etwa Zugangspunkte zur Nutzung von Diensten innerhalb des Mobilfunknetzes 102i. Zudem können in dem Identifizierungsmodul 104 Daten des Nutzers, wie beispielsweise Adressbuchdaten und/oder empfangene sowie gesendete Nachrichten, gespeichert sein, auf die der Nutzer während des Betriebs des Mobilfunkendgeräts 101i zugreifen kann. Die in dem Identifizierungsmodul 104 hinterlegten Daten sind in einem Dateisystem des Systems gespeichert, das für die Speicherung der Subskriptionsdaten Si und die anbieterspezifischen Parameter Xi vorgegebene Dateien, d.h. Dateien mit vorgegebenen Bezeichnungen, enthält, welche die Werte der Parameter Xi und die Datenelemente der Subskriptionsdaten Si enthalten. Über die genannten Daten hinaus können weitere Informationen in dem Identifizierungsmodul 104 gespeichert sein, die bei einem Wechsel der Subskriptionsdaten Si verändert werden oder beibehalten werden. Bei einer Veränderung können diese Daten entweder zusammen mit dem Subskriptionsdaten Si verändert werden oder zusammen mit den anbieterspezifischen Parametern Xi (falls diese zu einem anderen Zeitpunkt angepasst werden als die Subskriptionsdaten).

Anhand der Subskriptionsdaten Si ist das Identifizierungsmodul 104 mit einem Mobilfunknetz 102i, das als Heimatnetz bezeichnet wird, verknüpft. Innerhalb des Heimatnetzes 102i ist das Identifizierungsmoduls 104 insbesondere unter der in den Subskriptionsdaten Si enthaltenen Kennung in einer Teilnehmerdatenbank 105i registriert. Die Teilnehmerdatenbank 105i, die beispielsweise als ein HLR (Home Location Register) ausgestaltet sein kann, beinhaltet neben der Kennung des Identifizierungsmoduls 104 einen Schlüssel, der dem in den Subskriptionsdaten enthaltenen Schlüssel entspricht und bei der Authentisierung des Identifizierungsmoduls 104 eingesetzt wird. Dabei kann das mit der Teilnehmerdatenbank 105i verbundene Authentisierungszentrum des Heimatnetzes 102i bei der Authentisierung mittels des Schlüssels dieselbe Information wie in dem Mobilfunkendgerät 101 verschlüsseln und mit den von dem Mobilfunkendgerät 101 erhaltenen verschlüsselten Informationen vergleichen, um das Identifizierungsmodul 104 im Falle der Übereinstimmung beider verschlüsselter Informationen erfolgreich zu authentisieren. Über die den Subskriptionsdaten Si entsprechenden Daten hinaus können in der Teilnehmerdatenbank 105i weitere dem Identifizierungsmodul 104 zugeordnete Informationen enthalten sein, beispielsweise die dem Identifizierungsmodul 104 zugeordneten Berechtigungen für den Zugriff auf verschiedene Mobilfunkdienste.

Das in der Fig. 1 schematisch gezeigte Identifizierungsmodul 104 zeichnet sich dadurch aus, dass ein Wechsel der aktiven Subskriptionsdaten Si vorgenommen werden kann, so dass das dem Identifizierungsmodul 104 zugeordnete Heimatnetz 102i durch ein anderes ersetzt werden kann. Damit kann der Betreiber des Mobilfunkendgeräts 101 das Heimatnetz 102i bzw. den Mobilfunkanbieter wechseln, ohne hierzu das Identifizierungsmodul 104 austauschen zu müssen. Der Wechsel des Heimatnetzes 102i bzw. des Mobilfunkanbieters kann während des Betriebs des Identifizierungsmoduls 104 über ein Mobilfunknetz 102i über die Luftschnittstelle gesteuert werden. Es ist damit nicht erforderlich, das Identifizierungsmodul 104 für den Anbieterwechsel zu einer bestimmten Stelle, wie etwa einem Verkaufspunkt oder Servicestelle eines Anbieters zu transportieren, um den Wechsel vornehmen zu können. Vielmehr kann der Anbieterwechsel an jedem beliebigen Ort durchgeführt werden, an dem Mobilfunkempfang für das Mobilfunkendgerät 101 besteht.

Einige Wege zur Durchführung des Wechsels werden im Folgenden beispielhaft beschrieben. Dabei wird davon ausgegangen, dass der Wechsel von einem Anbieter A, der das Mobilfunknetz 102A betreibt, zu einem Anbieter erfolgt, der das Mobilfunknetz 102B betreibt.

Um den Wechsel von dem Betreiber A zu dem Betreiber B durchführen zu können, ist das Identifizierungsmodul 104 dazu ausgestaltet, zumindest zeitweise sowohl Subskriptionsdaten SA des Anbieters A als auch Subskriptionsdaten SB des Anbieters B zu speichern. Dabei ist jedoch jeweils nur einer der Subskriptionsdatensätze Si aktiv, d.h. kann bei der Einbuchung in ein Mobilfunknetz 102i zur Identifizierung und Authentisierung herangezogen werden. Der andere Subskriptionsdatensatz Si ist inaktiv und kann nicht verwendet werden. Die Steuerung der Aktivierung der Subskriptionsdatensätze Si wird von einer Applikation vorgenommen, die innerhalb des Identifizierungsmoduls 104 ausgeführt wird, die jedoch externe Steuerbefehle entgegennehmen und umsetzen kann. Die Möglichkeit zur Aktivierung und Deaktivierung von Subskriptionsdaten Si kann auf verschiedene Weise implementiert werden. Beispielsweise können die jeweils aktiven Subskriptionsdaten Si in den vorgesehenen Dateien hinterlegt werden, während die deaktivierten Subskriptionsdaten Si an anderer Stelle in dem Identifizierungsmodul 104 gespeichert werden, oder die Dateien enthalten einen Verweise auf die Speicherorte der zugehörigen Datenelemente der Subskriptionsdaten Si, wobei die Verweise veränderbar sind und jeweils auf die aktiven Subskriptionsdaten Si referenzieren.

Der zur Authentisierung verwendete Verschlüsselungsalgorithmus kann für beide Anbieter A und B übereinstimmen. Beispielsweise kann der an sich bekannte und von der 3GPP standardisierte Milenage-Algorithmus verwendet werden. Alternativ kann auch vorgesehen sein, dass anbieterspezifische Algorithmen eingesetzt werden. In diesem Fall erfolgt bei einem Anbieterwechsel auch ein Wechsel des Algorithmus. Dieser Wechsel kann in analoger Weise vorgenommen werden, wie der Wechsel der aktiven Subskriptionsdaten Si und wird daher nicht gesondert beschrieben. Wie im Folgenden auch für die Subskriptionsdaten Si beschrieben wird, können die verschiedenen Algorithmen vorab, beispielsweise bei der Herstellung oder Erstkonfigurierung in dem Identifizierungsmodul 104 implementiert werden, oder der neue Anbieter B installiert seinen Algorithmus bei dem Anbieterwechsel über die Luftschnittstelle.

Die anbieterspezifischen Parameter Xi werden bei einem Anbieterwechsel vorzugsweise ebenfalls ersetzt, so dass die Anbieter A und B anhand eigener Parameterwerte jeweils die von Ihnen gewünschte Konfiguration des Identifizierungsmoduls 104 vorgeben können. Für die anbieterspezifischen Parameter Xi kann ebenfalls vorgesehen sein, dass Parameter beider Anbieter A und B gleichzeitig in dem Identifizierungsmodul 104 verfügbar sind. In diesem Fall sorgt die Applikation des Identifizierungsmoduls 104 ebenfalls dafür, dass jeweils nur die Parameter Xi eines Anbieters aktiv sind und verwendet werden und die Parameter Xi des anderen Anbieters deaktiviert sind und nicht verwendet werden. Um die Parameter XA des Anbieters A durch die Parameter XB des Anbieters B zu ersetzen, deaktiviert die Applikation in dieser Ausgestaltung vorzugsweise die Parameter XA des Anbieters A und schaltet die Parameter XB aktiv. In einer weiteren Ausführungsform ist das gleichzeitige Vorhalten mehrere Parametersätze Xi nicht vorgesehen. In dieser Ausgestaltung erfolgt die Ersetzung der Parameter XA des Anbieters A durch die Parameter XB des Anbieters B, in dem die Parameter XA durch die Parameter XB überschrieben und die Parameter XA dabei gelöscht werden.

Die Subskriptionsdatensätze Si und die anbieterspezifischen Parameter Xi können von den Anbietern A und B manipuliert werden. Hierdurch können die Anbieter Subskriptionsdaten in dem Identifizierungsmodul 104 installieren und installierte Subskriptionsdaten Si verändern oder löschen, und anhand von Änderungen der anbieterspezifischen Parameter Xi die Konfiguration des Identifizierungsmoduls 104 verändern. Für den Zugriff auf die Daten des Identifizierungsmoduls 104 sowie für die Übermittlung von Steuerbefehlen und sonstigen Meldungen kann ein sicherer Mechanismus verwendet werden, um unberechtigte Zugriff auf das Identifizierungsmodul 104 zu vermeiden. In einer Ausgestaltung senden die Anbieter für den Zugriff auf das Identifizierungsmodul 104 kryptografisch gesicherte Nachrichten, die vorzugsweise zumindest teilweise verschlüsselt sind und in dem Identifizierungsmodul 104 entschlüsselt werden. Die zur Verschlüsselung und zur Entschlüsselung verwendeten Schlüssel können symmetrische oder asymmetrische Schlüsselpaare bilden. Neben der Verschlüsselung kann auch vorgesehen sein, dass die Nachrichten weitere Authentisierungsmerkmale enthalten, beispielsweise eine digitale Signatur des Absenders, die in dem Identifizierungsmodul 104 geprüft werden, um die Nachricht zu authentisieren. Zur Prüfung wird die digitale Signatur, die mit einem Schlüssel des Anbieters verschlüsselt ist, mit einem zugehörigen, in dem Identifizierungsmodul 104 hinterlegten Schlüssel entschlüsselt. Die gesicherten Nachrichten haben zudem ein spezielles Format, so dass sie beim Empfang in dem Mobilfunkendgerät 101 automatisch und vorzugsweise transparent, d.h. unsichtbar, für den Nutzer an das Identifizierungsmodul 104 weitergeleitet werden. Im Folgenden werden die gesicherten Nachrichten auch als OTA (Over the Air)-Nachrichten bezeichnet und die verwendeten Schlüssel als OTA-Schlüssel. Die Bezeichnung "OTA" wird an den standardisierten OTA-Mechanismus für die Fernwartung von Chipkarten angelehnt, ist hierin jedoch nicht auf diesen speziellen Mechanismus beschränkt.

Die in dem Identifizierungsmodul 104 verfügbaren OTA-Schlüssel können beispielsweise bei der Herstellung bzw. erstmaligen Einrichtung in dem Identifizierungsmodul 104 installiert werden. Die OTA-Schlüssel sind dem Identifizierungsmodul 104 vorzugsweise eindeutig zugeordnet, um zu verhindern, das OTA-Nachrichten, die an ein bestimmtes Identifizierungsmodul 104 adressiert sind, von anderen Identifizierungsmodulen 104 gelesen werden können. Darüber hinaus verwenden die verschiedenen Anbieter vorzugsweise eigene OTA-Schlüssel. Dabei kann vorgesehen sein, dass der Zugriff der Betreiber A und B auf die Subskriptionsdaten Si auf die eigenen Subskriptionsdaten beschränkt ist. D.h., ein Anbieter kann eigene Subskriptionsdaten Si installieren, verändern und löschen, ist jedoch nicht dazu berechtigt, in dem Identifizierungsmodul 104 vorliegende Subskriptionsdaten eines anderen Anbieters zu verändern oder zu löschen. Die Zugriffsberechtigung wird bei einem Zugriff auf Subskriptionsdaten Si in dem Identifizierungsmodul 104 geprüft. Ähnliche Zugriffsberechtigungen können optional auch für den Zugriff auf die Parameter Xi vorgesehen werden, insbesondere wenn gleichzeitig mehrere Parametersätze unterschiedliche Anbieter in dem Identifizierungsmodul 104 vorliegen.

Die in dem Identifizierungsmodul 104 gespeicherten Nutzdaten werden bei dem Wechsel von dem Anbieter A zu dem Anbieter B vorzugsweise nicht verändert. Somit hat beispielsweise der Nutzer des Mobilfunkendgeräts 101 auch nach dem Anbieterwechsel unverändert Zugriff auf seine in dem Identifizierungsmodul 104 gespeicherten Daten und kann diese nach dem Anbieterwechsel weiter verwenden, ohne hierfür besondere Schritte durchführen zu müssen.

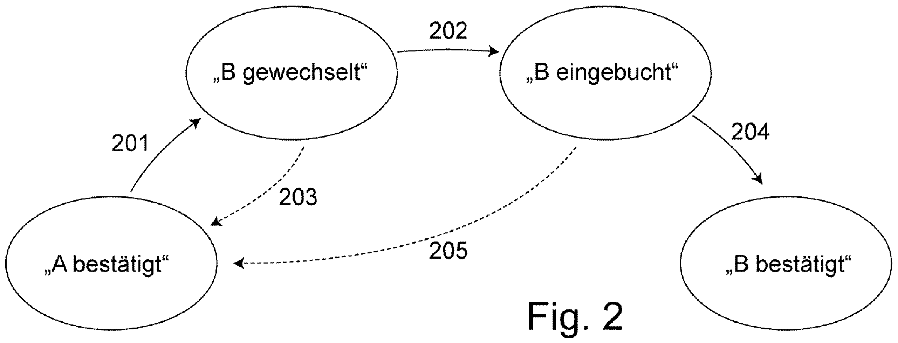

Im Folgenden wird der Wechsel von den aktiven Subskriptionsdaten SA des Anbieters A zu den aktiven Subskriptionsdaten SB des Anbieters B unter Bezugnahme auf das in der Figur 2 dargestellte schematische Zustandsdiagramm für das Identifizierungsmodul 104 erläutert. Dabei wird der Vorgang zum Wechseln der aktiven Subskriptionsdaten Si beispielhaft ausgehend von einem Zustand beschrieben, in dem das Mobilfunkendgerät 101 unter Verwendung der Subskriptionsdaten SA des Anbieters A in ein Mobilfunknetz eingebucht ist und die Aktivierung der Subskriptionsdaten SA nicht in einer unten beschriebenen Weise automatisch von dem Identifizierungsmodul 104 verändert werden kann. Dieser Zustand wird in der Figur 2 als "A bestätigt". Bei dem Mobilfunknetz 102i in welches das Mobilfunkendgerät 101 eingebucht ist, kann es sich um das Mobilfunknetz 102A des Anbieters A handeln, welches im Zustand "A bestätigt" das Heimatnetz des Identifizierungsmoduls 104 ist. Grundsätzlich kann das Mobilfunkendgerät 101 jedoch auch unter Verwendung der Subskriptionsdaten SA des Anbieters mittels Roaming in anderes Mobilfunknetz eingebucht sein.

Der Anbieterwechsel kann von dem Nutzer des Mobilfunkendgeräts 101 veranlasst werden, wenn sich bei dem Nutzer der Bedarf für einen solchen Wechsel ergibt. In diesem Fall wird sowohl der neue Anbieter B informiert, der den Wechsel, wie im Folgenden beschrieben wird, initiiert, als auch der alte Anbieter A, der den Wechsel bestätigt, bevor er endgültig abgeschlossen wird.

Zur Initiierung des Wechsels sendet der Anbieter B eine OTA-Nachricht mit einem Steuerbefehl zur Kommandierung eines Wechsels von den derzeit aktiven Subskriptionsdaten SA zu den Subskriptionsdaten SB an das Identifizierungsmodul 104. Die Nachricht, die über das Mobilfunknetz 101i gesendet wird, mit dem Mobilfunkendgerät 101 aktuell verbunden ist, kann zudem die Subskriptionsdaten SB des Anbieters B enthalten. In diesem Fall werden die Subskriptionsdaten SB nach dem Erhalt der Nachricht in dem Identifizierungsmodul 104 installiert. Gleichfalls können bereits weitere anbieterspezifische Parameter XB des Anbieters B in der Nachricht enthalten sein, die nach dem Erhalt der Nachricht ebenfalls in dem Identifizierungsmodul 104 hinterlegt werden und dabei die zuvor installierten Parameter XA des Anbieters A ersetzen können. In einer weiteren Ausgestaltung werden die Subskriptionsdaten SB des Anbieters B bereits vorab in dem Identifizierungsmodul 104 gespeichert, wenn der Anbieter B die Nachricht mit dem Befehl zum Wechseln der aktiven Subskriptionsdaten an das Identifizierungsmodul 104 sendet. Beispielsweise können die Subskriptionsdaten SB (zusammen mit den Subskriptionsdaten SA des Anbieters A) bereits bei der Herstellung bzw. ersten Einrichtung des Identifizierungsmoduls 104 in diesem hinterlegt werden. Optional kann dies auch für die Parameter Xi vorgesehen sein.

Nach dem Erhalt der Nachricht des Anbieters B und deren erfolgreicher Authentisierung führt das Identifizierungsmodul 104 den darin enthaltenen Befehl zum Wechseln der aktiven Subskriptionsdaten Si aus. Hierzu werden die zuvor aktiven Subskriptionsdaten SA des Anbieters A von dem Identifizierungsmodul 104 deaktiviert, und die ggf. zuvor installierten Subskriptionsdaten SB des Betreibers B werden aktiviert. Sodann befindet sich das Identifizierungsmodul 104 in dem in der Figur 2 gezeigten Zustand "B gewechselt", d.h. der Wechsel entspricht dem Zustandsübergang 201.

In einer Ausgestaltung werden bei dem Zustandsübergang 201 überdies die weiteren anbieterspezifischen Parameter XA des Anbieters A zumindest teilweise durch die anbieterspezifischen Daten des Anbieters B ersetzt, die ggf. in der OTA-Nachricht enthalten waren, die zur Initiierung des Anbieterwechsels von dem Anbieter B an das Identifizierungsmodul 104 gesendet worden ist. Insbesondere kann vorgesehen sein, dass die Informationen über bevorzugte Netze ersetzt werden, so dass sich das Mobilfunkendgerät 101 bei einem auf den Wechsel folgenden Einbuchungsvorgang in ein von dem neuen Anbieter B vorgegebenes bevorzugtes Mobilfunknetz einbucht. Alternativ können die Parameter Xi auch später von dem Anbieter B - beispielsweise anhand einer entsprechende OTA-Nachricht - durch eigene Parameter XB ersetzt werden.

Im Zusammenhang mit der Aktivierung der Subskriptionsdaten SB veranlasst das Identifizierungsmodul 104 das Mobilfunkendgerät 101 dazu, sich aus dem Mobilfunknetz 102i, mit dem es aktuell verbunden ist, auszubuchen und zu versuchen, sich unter Verwendung der nunmehr aktiven Subskriptionsdaten SB des neuen Anbieters B erneut in ein Mobilfunknetz 102i einzubuchen. Nach Ersetzung der für die Netzauswahl relevanten Parameter Xi kann für die Einbuchung das von dem Anbieter B betriebene Mobilfunknetz 102B ausgewählt werden, bei dem es sich um das neue Heimatnetz des Identifizierungsmoduls 104 handeln, oder - etwa im Falle der Nichtverfügbarkeit des Mobilfunknetzes 102B - ein anderes anhand der anbieterspezifischen Informationen XI ausgewähltes Mobilfunknetz. Gleichfalls kann die Einbuchung auch über das alte Heimatnetz 102A erfolgen bzw. über das Mobilfunknetz 102i, in welches das Mobilfunkendgerät 101 vor dem Wechsel der aktiven Subskriptionsdaten Si eingebucht war. Dies ist insbesondere der Fall, wenn eine Ersetzung der anbieterspezifischen Informationen Xi für die Netzauswahl zum Zeitpunkt der Einbuchung noch nicht vorgenommen worden ist.

Bei der Einbuchung wird das Identifizierungsmodul 104 anhand der neuen Subskriptionsdaten SB von dem Anbieter B mittels der zugehörigen in der Teilnehmerdatenbank 105B des Anbieters B für das Identifizierungsmodul 104 hinterlegten Angaben identifiziert und authentisiert. Dieser Einbuchungsvorgang wird durch eine Anmeldung eingeleitet, die von dem Mobilfunkendgerät 101 gesendet wird, und die erfolgreiche Einbuchung wird von dem Anbieter B bzw. dem die Identifizierung und Authentisierung vornehmenden Authentisierungszentrum des Anbieters B an das Mobilfunkendgerät 101 gemeldet.

Um das Identifizierungsmodul 104 über ein erfolgreiches Einbuchen zu informieren, kann vorgesehen sein, dass die in dem Mobilfunkendgerät 101 erhaltene Bestätigung an das Identifizierungsmodul 104 gemeldet wird. Hierzu kann eine entsprechende Meldung von dem Terminal 106 des Mobilfunkendgeräts 101 an das Identifizierungsmodul 104 übergeben werden, deren Übermittlung von dem Terminal 106 initiiert oder die von dem Identifizierungsmodul 104 abgefragt werden kann. Alternativ kann vorgesehen sein, dass von dem Anbieter B eine Nachricht, vorzugsweise eine sichere OTA-Nachricht, an das Identifizierungsmodul 104 gesendet wird, um die erfolgreiche Einbuchung zu bestätigen. Auf diese Weise kann die Bestätigung auch dann an das Identifizierungsmodul 104 übermittelt werden, wenn das Terminal 106 des Mobilfunkendgeräts 101 die Übermittlung einer Bestätigungsmeldung an das Identifizierungsmodul 104 nicht unterstützt. Eine weitere Ausgestaltung sieht vor, dass das Identifizierungsmodul 104 interne Parameter überwacht, in denen das aktuelle Mobilfunknetz 102i und/oder der Einbuchungsstatus des Mobilfunkendgeräts 101 hinterlegt wird. Die erfolgreiche Einbuchung mit den neuen Subskriptionsdaten SB wird in diesem Fall anhand des Werts eines solchen Parameters ermittelt. Ein Beispiel hierfür ist der Parameter EF_{LOCI} in dem jeweils das aktuelle Mobilfunknetz hinterlegt ist.

Aufgrund der Aktivierung der Subskriptionsdaten SB des Anbieters B oder aufgrund der Anmeldung zur Einbuchung in ein Mobilfunknetz unter Verwendung der Subskriptionsdaten SB des Anbieters B wird in dem Identifizierungsmodul 104 ein Timer T1 gestartet, um die Zeitspanne T1 abzumessen. Wenn das Identifizierungsmodul 104 die Bestätigung über die erfolgreiche Einbuchung des Mobilfunkendgeräts 101 vor Ablauf des Timers T1 erhält, wechselt das Identifizierungsmodul 104 in einen Zustand, der in der Fig. 2 als "B eingebucht" bezeichnet wird und in dem der Vorgang zum Wechsel der aktiven Subskriptionsdaten weiter fortgesetzt wird. Nach diesem Zustandsübergang, der in der Figur 2 durch die den Pfeil 202 veranschaulicht wird, kann der Timer T1 gelöscht werden.

Läuft der Timer T1 hingegen ab, bevor das Identifizierungsmodul 104 die Bestätigungsmeldung über die erfolgreiche Einbuchung des Mobilfunkendgeräts 101 unter Verwendung der Subskriptionsdaten SB erhalten hat, so führt das Identifizierungsmodul 104 erneut einen Wechsel der aktiven Subskriptionsdaten Si zurück zu den Subskriptionsdaten SA des Anbieters A durch. Hierbei werden die Subskriptionsdaten SB des Anbieters B deaktiviert und die Subskriptionsdaten SA des Anbieters A erneut aktiviert. Nach diesem Wechsel der Subskriptionsdaten Si bucht sich das Mobilfunkendgerät 101 erneut unter Verwendung der Subskriptionsdaten SA des Anbieters A in ein Mobilfunknetz 101 ein und wird von dem Anbieter A identifiziert und authentisiert. Hierdurch gelangt das Identifizierungsmodul 104 zurück in den Zustand "A bestätigt", wie in Figur 2 anhand des Pfeils 203 veranschaulicht ist.

Anstelle eines Timers kann die Zeitspanne in dem Identifizierungsmodul 104 auch in anderer Weise gemessen werden, beispielsweise mittels eines Ereigniszählers, der periodisch auftretende Ereignisse, wie etwa den Empfang periodischer Statusmeldungen des Terminals 106, empfängt. Ergänzend oder alternativ zur Abmessung der Zeitspanne kann zudem vorgesehen sein, dass zu den Subskriptionsdaten SA des Anbieters A zurückgewechselt wird, wenn die Bestätigung über das erfolgreiche Einbuchen unter Verwendung der neuen Subskriptionsdaten nicht bis zur Erfassung eines vorgegebenen Ereignisses erhalten worden ist. Als Ereignisse kommen hier beispielsweise ein Wechsel in eine andere Zelle des Mobilfunknetzes 102i oder eine Nutzereingabe in Betracht. Grundsätzlich können jedoch alle Ereignisse zugrunde gelegt werden, die in dem Identifizierungsmodul 104 erfassbar sind.

Sofern die zur Netzauswahl herangezogenen Parameter Xi bei dem Wechsel zu den Subskriptionsdaten SB des Anbieters B ersetzt worden sind, kann diese Ersetzung bei der erneuten Aktivierung der Subskriptionsdaten SA des Anbieters A durch eine erneute Aktivierung der Parameter XA des Anbieters A rückgängig gemacht werden, falls dies möglich ist (d.h. diese Daten nicht bereits gelöscht worden sind). Hierdurch werden die Parameter XA des Anbieters A für die Netzauswahl bei der Einbuchung unter Verwendung der Subskriptionsdaten SA des Anbieters A verwendet. Sofern die Parameter XA des Anbieters A nicht mehr vorhanden sind, werden bei der Einbuchung zunächst die neuen Parameter XB des Anbieters B herangezogen. Diese können - wenn nach der Rückkehr kein erneuter Wechsel der aktiven Subskriptionsdaten Si erfolgt - beispielsweise von dem Anbieter A mittels einer OTA-Nachricht durch eigene Parameter ersetzt werden.

Aufgrund der im Fehlerfall vorgesehenen Rückkehr zu den Subskriptionsdaten SA des Anbieters A wird verhindert, dass sich das Mobilfunkendgerät 101 nach dem Wechsel der aktiven Subskriptionsdaten Si nicht mehr in ein Mobilfunknetz einbuchen kann und in der Folge eine drahtlose Kommunikation mit dem Identifizierungsmodul 104 nicht mehr möglich ist. Nach der erneuten Einbuchung in ein Mobilfunknetz unter Verwendung der Subskriptionsdaten SA des alten Anbieters A kann erneut ein Wechsel der Subskriptionsdaten Si versucht werden. Hierzu können beispielsweise korrigierte Subskriptionsdaten SB von dem Anbieter B in das Identifizierungsmodul 104 übermittelt werden, oder es können Korrekturen im Mobilfunknetz 102B des Anbieters B vorgenommen werden, um dem Mobilfunkendgerät 101 nach einem erneuten Wechsel der aktiven Subskriptionsdaten eine erfolgreiche Einbuchung zu ermöglichen. Die Subskriptionsdaten SB des Anbieters B bleiben insoweit nach ihrer Deaktivierung und der Rückkehr zur Aktivierung der Subskriptionsdaten SA des Anbieters A vorzugsweise in dem Identifizierungsmodul 104 gespeichert. In alternativen Ausgestaltungen kann jedoch gleichfalls vorgesehen sein, dass die Subskriptionsdaten SB gelöscht werden.

Nachdem die erfolgreiche Einbuchung des Mobilfunkendgeräts 101 in ein Mobilfunknetz unter Verwendung der Subskriptionsdaten SB des Anbieters B bestätigt worden ist und das Identifizierungsmodul 104 in den Zustand "B gewechselt" übergegangen ist, wird vorzugsweise eine Autorisierung des Anbieterwechsels durch den alten Anbieter A vorgenommen. Dieser ist an den vorangegangenen Schritten des Wechselvorgangs nicht beteiligt. Insoweit verhindert die vorgesehene ausdrückliche Autorisierung des Wechsels durch den Anbieter A, dass ein Anbieterwechsel ohne Zustimmung des alten Anbieters A vorgenommen werden kann.

Um die Autorisierung durchzuführen, wird nach der erfolgreichen Einbuchung des Mobilfunkendgeräts 101 in ein Mobilfunknetz unter Verwendung der Subskriptionsdaten SB des Anbieters B eine Nachricht an den alten Anbieter A gesendet. Mit der Nachricht wird der Anbieter A über den Wechsel der aktiven Subskriptionsdaten Si informiert. Die Nachricht wird in einer Ausgestaltung in dem Identifizierungsmodul 104 erzeugt, welches auch die Übermittlung der Nachricht von dem Endgerät 101 zu dem Anbieter A steuert. In einer alternativen Ausgestaltung wird der alte Anbieter A von dem neuen Anbieter B über den Wechsel der aktiven Subskriptionsdaten informiert, nachdem der Anbieter B die erfolgreiche Einbuchung mit den Subskriptionsdaten SB registriert hat. Um den Anbieterwechsel zu autorisieren, sendet der Anbieter A nach Erhalt der Information über den Wechsel von dem Mobilfunkendgerät 101 oder von dem neuen Anbieter A eine Bestätigungsnachricht an das Identifizierungsmodul 104, mit welcher der Anbieter A den Wechsel bestätigt. Die Nachricht ist vorzugsweise eine mit dem OTA-Schlüssel des Anbieters A gesicherte OTA-Nachricht, deren Authentizität in dem Identifizierungsmodul 104 geprüft wird.

Aufgrund der Übermittlung der Nachricht von dem Mobilfunkendgerät 101 an den Anbieter A oder aufgrund der Bestätigung über den erfolgreichen Einbuchungsvorgang unter Verwendung der Subskriptionsdaten SB wird in dem Identifizierungsmodul 104 ein weiterer Timer T2 gestartet, um die Zeitspanne T2 abzumessen. Wenn das Identifizierungsmodul 104 die Bestätigungsnachricht des Anbieters A vor Ablauf des Timers T2 erhält und die Authentizität der Nachricht erfolgreich überprüft worden ist, wechselt das Identifizierungsmodul 104 in einen Zustand, in dem die Aktivierung der Subskriptionsdaten SB des Anbieters B nur durch die erneute anbieterseitige Initiierung eines Anbieterwechsels und nicht mehr selbsttätig durch das Identifizierungsmodul 104 aufgehoben werden kann. Dieser Zustand wird in dem Zustandsdiagramm der Figur 2 als "B bestätigt" bezeichnet und der Übergang in diesen Zustand wird durch den Pfeil 204 veranschaulicht.

Wird hingegen die Bestätigungsnachricht des alten Anbieters A nicht vor Ablauf des Timers T2 erhalten und/oder nicht erfolgreich dem Identifizierungsmodul 104 authentisiert, führt das Identifizierungsmodul 104 automatisch einen Wechsel der aktiven Subskriptionsdaten Si zu den aktiven Subskriptionsdaten SA des Anbieters A zurückkehrt und sich unter Verwendung dieser Subskriptionsdaten SA in ein Mobilfunknetz einbucht. Auf diese Weise kehrt das Identifizierungsmodul 104 automatisch zu den Subskriptionsdaten SA des Anbieters A zurück, wenn dieser den Anbieterwechsel nicht autorisiert. Die Durchführung von Anbieterwechseln ist somit ohne die Zustimmung des Anbieters A nicht möglich. Aufgrund der Rückkehr zu den Subskriptionsdaten des Anbieters A erfolgt der in der Figur 2 durch den Pfeil 205 veranschaulichte Übergang zurück in den Zustand "A bestätigt". Die Rückkehr wird in der gleichen Weise vorgenommen wie bei dem Zustandsübergang 203 im Falle eines Fehlers bei der Einbuchung unter Verwendung der Subskriptionsdaten SB. Zur Vermeidung von Wiederholungen wird daher auf eine erneute ausführliche Beschreibung des Rückkehrvorgangs verzichtet und auf die vorherigen Ausführungen verwiesen.

Anstelle des Timers T2 kann, wie zuvor im Zusammenhang mit dem Timer T1 bereits beschrieben, beispielsweise auch ein Ereigniszähler verwendet werden, um die Zeitspanne T2 abzumessen. Alternativ oder ergänzend zu der Abmessung der Zeitspanne kann zudem ebenfalls vorgesehen sein, dass zu den Subskriptionsdaten SA des Anbieters A zurückkehrt wird, wenn ein bestimmtes Ereignis erfasst wird, ohne dass die Bestätigungsnachricht des Anbieters SA in dem Identifizierungsmodul 104 empfangen wird.

Nachdem das Identifizierungsmodul 104 in den Zustand "B bestätigt" übergegangen ist, wird vorzugsweise eine Nachricht an den alten Anbieter A gesendet, mit welcher der Anbieter A über den erfolgreichen Abschluss des Anbieterwechsels informiert wird. Die Nachricht kann in dem Identifizierungsmodul 104 erzeugt werden, nachdem das Identifizierungsmodul 104 die Bestätigungsnachricht des Anbieters A vor Ablauf des Timers T2 erhalten und erfolgreich authentisiert hat, und die Nachricht kann von dem Mobilfunkendgerät 101, gesteuert durch das Identifizierungsmodul 104, an den Anbieter A gesendet werden. Nach Erhalt der Nachricht kann der Anbieter A die Registrierung des Identifizierungsmoduls 104 und die zugehörigen Daten in seiner Teilnehmerdatenbank 105A löschen. Vorzugsweise wird der Löschvorgang nicht vor Erhalt der Nachricht durchgeführt, da der Anbieter A vor dem Erhalt der Nachricht nicht davon ausgehen kann, dass die zuvor von ihm gesendete Bestätigungsnachricht in dem Identifizierungsmodul 104 empfangen und erfolgreich authentisiert werden konnte, und das Identifizierungsmodul 104 in den Zustand "B bestätigt" gewechselt hat, in dem eine automatische Rückkehr zu den Subskriptionsdaten SA des Anbieters A nicht mehr vorgesehen ist. Insbesondere ist es zweckmäßig, die Daten des Identifizierungsmoduls 104 von dem Anbieters A nicht bereits nach Absendung der Bestätigungsnachricht zu löschen - auch, wenn die Bestätigungsnachricht nach der erfolgreichen Einbuchung mit dem neuen Subskriptionsdaten SB gesendet wird. Grund hierfür ist, dass die Bestätigungsnachricht aufgrund eines Übermittlungsfehlers nicht in dem Identifizierungsmodul 104 empfangen werden könnte, was zu einem Rückfall zu den alten Subskriptionsdaten des Anbieters A führen würde.

Eine alternative Ausgestaltung unterscheidet sich von der zuvor beschriebenen Ausführungsform dadurch, dass das Identifizierungsmodul 104 beim Ausbleiben der Bestätigung des Anbieterwechsels durch den alten Anbieter nicht von der Aktivierung der Subskriptionsdaten SB des Anbieters B zur Aktivierung der Subskriptionsdaten SA des Anbieters A zurückkehrt, sondern dass ohne die Bestätigung des Wechsels durch den alten Anbieter keine Aktivierung der Subskriptionsdaten SB des neuen Anbieters B vorgenommen werden kann.

In dieser Ausführungsform wird der alte Anbieter A bereits nach Erhalt der den Anbieterwechsel initiierenden OTA-Nachricht des Anbieters B über den Wechsel informiert. Dies kann, wie zuvor beschrieben, durch eine Mitteilung erfolgen, die von dem Identifizierungsmodul 104 an den alten Anbieter A gesendet wird, oder der alte Anbieter kann von dem neuen Anbieter B über den Wechsel informiert werden. Aufgrund der Meldung, dass ein Anbieterwechsel in dem Identifizierungsmodul 104 durchgeführt werden soll, sendet der Anbieter A im Falle seiner Zustimmung eine OTA-Nachricht mit einer Bestätigung des Wechsels an das Identifizierungsmodul 104, die in dem Identifizierungsmodul 104 authentisiert wird. Nach dem Empfang dieser OTA-Nachricht und ihrer erfolgreichen Authentisierung aktiviert das Identifizierungsmodul 104 die Subskriptionsdaten SB des neuen Anbieters B und deaktiviert die Subskriptionsdaten SA des alten Anbieters A. Bis zum Empfang der Nachricht blockiert das Identifizierungsmodul 104 hingegen die Aktivierung der Subskriptionsdaten SB des Anbieters B. Gleichfalls wird die Aktivierung der Subskriptionsdaten SB des Anbieters B von dem Identifizierungsmodul 104 blockiert, wenn eine OTA-Nachricht des alten Anbieters A zwar in dem Identifizierungsmodul 104 empfangen wird, diese jedoch nicht erfolgreich authentisiert werden kann, oder wenn in dem Authentisierungsmodul eine OTA-Nachricht des Anbieters A empfangen wird, die den Anbieterwechsel untersagt.

Nach der Aktivierung der Subskriptionsdaten des Anbieters SB des Anbieters B wird in der zuvor beschriebenen Weise unter Verwendung dieser Subskriptionsdaten SB versucht, das Mobilfunkendgerät 101 in ein Mobilfunknetz einzubuchen. Gelingt dies, ist der Anbieterwechsel abgeschlossen, und das Identifizierungsmodul 104 befindet sich im Zustand "B bestätigt". Dies wird vorzugsweise in der zuvor beschriebenen Weise an den alten Anbieter A gemeldet, der aufgrund des Erhalts der entsprechenden Meldung die Registrierung des Identifizierungsmoduls 104 löschen kann. Kann das Mobilfunkendgerät 101 nicht erfolgreich unter Verwendung der Subskriptionsdaten SB des Anbieters B in ein Mobilfunknetz 102 eingebucht werden, kehrt das Identifizierungsmodul, wie zuvor beschrieben, zur Aktivierung der Subskriptionsdaten SA des alten Anbieters A und damit in den Zustand "A bestätigt" zurück, und in der Folge kann beispielsweise erneut versucht werden, einen Anbieterwechsel vorzunehmen.

In der zuvor beschriebenen Weise kann sicher und zuverlässig von den Subskriptionsdaten SA eines ersten Anbieters A zu den Subskriptionsdaten SB eines zweiten Anbieters B gewechselt werden. In ähnlicher Weise können während des Lebenszyklus des Identifizierungsmoduls 104 weitere Wechsel von Subskriptionsdaten vorgenommen werden. Beispielsweise kann einmal oder mehrmals zu den Subskriptionsdaten Si eines weiteren Anbieters gewechselt werden und/oder zu den Subskriptionsdaten Si eines Anbieters, die bereits aktiviert waren, zurückgekehrt werden.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugsziffern

- 101: Mobilfunkendgerät
- 102i: Mobilfunknetz (i = A, B)
- 103: Funkmodul
- 104: Identifizierungsmodul
- 105i: Teilnehmerdatenbank (i = A, B)
- 106: Terminal

- 201-205: Zustandsübergänge

## Patentansprüche

1. Verfahren zum Wechsel von aktiven Subskriptionsdaten in einem Identifizierungsmodul zur Verwendung in einem Mobilfunkendgerät, das mit einem Mobilfunknetz verbunden werden kann, dadurch charakterisiert, dass das Identifizierungsmodul nach einer Aktivierung von neuen Subskriptionsdaten selbsttätig zur Aktivierung von vor dem Wechsel bereits aktivierten alten Subskriptionsdaten zurückkehrt, wenn nach der Aktivierung der neuen Subskriptionsdaten keine Bestätigungsnachricht mit einer Bestätigung des Wechsels der aktiven Subskriptionsdaten von einem mit den alten Subskriptionsdaten verknüpften alten Anbieter erhält, wobei die Bestätigungsnachricht wenigstens ein dem alten Anbieter zugeordnetes Authentisierungsmerkmal umfasst, das von dem Identifizierungsmodul geprüft wird.

2. Verfahren nach Anspruch 1, wobei das Identifizierungsmodul zusätslich zu der Aktivierung der alten Subskriptionsdaten zurückkehrt, wenn das Identifizierungsmodul nach der Aktivierung der neuen Subskriptionsdaten nicht feststellt, dass das Mobilfunkendgerät unter Verwendung der neuen Subskriptionsdaten in ein Mobilfunknetz eingebucht ist.

3. Verfahren nach einem der vorangegangenen Ansprüche, wobei das Identifizierungsmodul die Feststellung, dass das Mobilfunkendgerät unter Verwendung der neuen Subskriptionsdaten in ein Mobilfunknetz eingebucht ist, aufgrund des Empfangs einer infolge des Einbuchens gesendeten Bestätigungsnachricht trifft.

4. Verfahren nach Anspruch 1 wobei das Identifizierungsmodul dem alten Anbieter den Wechsel der aktiven Subskriptionsdaten meldet, und die Bestätigungsnachricht aufgrund der Meldung an das Identifizierungsmodul übermittelt wird.

5. Verfahren nach einem der Ansprüche 1-4, wobei die Rückkehr zu der Aktivierung der alten Subskriptionsdaten erfolgt, wenn die Nachricht nicht innerhalb einer Zeitspanne erhalten wird, die aufgrund der Übermittlung der Meldung an den alten Anbieter in Lauf gesetzt wird.

6. Verfahren nach einem der vorangegangenen Ansprüche, wobei das Identifizierungsmodul eine Bestätigungsmeldung an den alten Anbieter übermittelt, wenn aufgrund der Erfassung der Bestätigungsnachricht eine Aktivierung der neuen Subskriptionsdaten beibehalten wird.

7. Verfahren nach einem der vorangegangenen Ansprüche, wobei die neuen Subskriptionsdaten innerhalb einer Nachricht mit einem Authentisierungsmerkmal des mit den neuen Subskriptionsdaten verknüpften neuen Anbieters an das Identifizierungsmodul übermittelt werden und nach Prüfung des Authentisierungsmerkmals in dem Identifizierungsmodul installiert werden.

8. Verfahren nach einem der vorangegangenen Ansprüche, das das Identifizierungsmodul zur Prüfung des einem Anbieters zugeordneten Authentisierungsmerkmals einen kryptografischen Schlüssel heranzieht, der aus einer Mehrzahl von in dem Identifizierungsmodul hinterlegten, verschiedenen Anbietern zugeordneten geheimen Schlüsseln ausgewählt wird.

9. Identifizierungsmodul zur Verwendung in einem Mobilfunkendgerät, das mit einem Mobilfunknetz verbunden werden kann, wobei das Identifizierungsmodul dazu eingerichtet ist, aktive Subskriptionsdaten zu wechseln und wenigstens ein vorgegebenes Ereignis zu erfassen, und wobei das Identifizierungsmodul dazu eingerichtet ist, nach einer Aktivierung von neuen Subskriptionsdaten selbsttätig zu der Aktivierung von vor dem Wechsel bereits aktivierten alten Subskriptionsdaten zurückzukehren, wenn das Ereignis nach der Aktivierung der neuen Subskriptionsdaten nicht erfasst wird, dadurch charakterisiert, dass das Ereignis darin besteht keine Bestätigungsnachricht mit einer Bestätigung des Wechsels der aktiven Subskriptionsdaten von einem mit den alten Subskriptionsdaten verknüpften alten Anbieter zu erhalten, wobei die Bestätigungsnachricht wenigstens ein dem alten Anbieter zugeordnetes Authentisierungsmerkmal umfasst, das von dem Identifizierungsmodul geprüft wird.

## Claims

1. A method for changing active subscription data in an identification module, for use in a cellular device that can be connected to a cellular network, **characterized in that**, after activation of new subscription data, the identification module automatically returns to activation of old subscription data that had already been activated before the change if, after the activation of the new subscription data, no conformation message with a confirmation of the change of the active subscription data from an old provider linked with the old subscription data is received, wherein the confirmation message includes at least one authentication feature assigned to the old provider and which is checked by the identification module.

2. The method according to claim 1, wherein the identification module additionally returns to the activation of the old subscription data if, after the activation of the new subscription data, the identification module does not ascertain that the cellular device is logged on to a cellular network using the new subscription data.

3. The method according to claim 1, wherein the identification module ascertains whether the cellular device is logged on to a cellular network using the new subscription data on the basis of the receipt of a confirmation message sent as a result of the log-on.

4. The method according to claim 1, wherein the identification module reports the change in the active subscription data to the old provider and the confirmation message is transmitted to the identification module on the basis of this report.

5. The method according to one of claims 1 to 4, wherein the return to the activation of the old subscription data takes place if the message is not received within a period of time that starts when the report is transmitted to the old provider.

6. The method according to one of the preceding claims, wherein the identification module transmits a confirmation message to the old service provider if, on the basis of the detection of the confirmation message, an activation of the new subscription data is retained.

7. The method according to one of the preceding claims, wherein the new subscription data is transmitted to the identification module in a message with an authentication feature of the new provider that is linked to the new subscription data and, after verification of the authentication feature, it is installed in the identification module.

8. The method according to one of the preceding claims, wherein the identification module uses a cryptographic key in order to check the authentication feature associated with a provider, and this key is selected from a plurality of secret keys that are stored in the identification module and that are associated with various providers.

9. An identification module for use in a cellular device that can be connected to a cellular network, wherein the identification module is configured to change active subscription data and to detect at least one predefined event, and wherein the identification module is configured so that, after activation of new subscription data, the identification module returns automatically to activation of old subscription data that had already been activated before the change, if the event is not detected after the activation of the new subscription data, **characterized in that** the event consists **in that** no confirmation message with a confirmation of the change of the active subscription data is received from an old provider linked with the old subscription data, wherein the confirmation message includes at least one authentication feature assigned to the old provider, which is checked by the identification module.

## Revendications

1. Procédé pour changement de données de souscription actives dans un module d'identification pour une utilisation dans un terminal mobile, qui peut être relié à un réseau de téléphonie mobile, **caractérisé en ce que** le module d'identification retourne automatiquement, après l'activation de nouvelles données de souscription, à l'activation des anciennes données de souscription déjà activées avant la modification, lorsque, après l'activation des nouvelles données de souscription, il ne reçoit aucun message de confirmation avec une confirmation de la modification des données de souscription actives d'un ancien opérateur associé aux anciennes données de souscription, le message de confirmation comprenant au moins un élément d'authentification assignés à l'ancien opérateur, qui est vérifié par le module d'identification.

2. Procédé selon la revendication 1, **caractérisé en ce que** le module d'identification retourne également à l'activation des anciennes données de souscription lorsque le module d'identification ne constate pas, après l'activation des nouvelles données de souscription, que le terminal de radiotéléphonie mobile est enregistré dans un réseau de téléphonie mobile avec les nouvelles données de souscription.

3. Procédé selon l'une quelconque des revendications précédentes, **caractérisé en ce que** le module d'identification constate que le terminal de radiotéléphonie mobile est enregistré avec les nouvelles données de souscription dans un réseau de téléphonie mobile, en vertu de la réception d'un message de confirmation envoyé suite à l'enregistrement.

4. Procédé selon la revendication 1, **caractérisé en ce que** le module d'identification signale à l'ancien opérateur le changement des données de souscription actives, et le message de confirmation étant transmis en raison de la notification au module d'identification.

5. Procédé selon l'une quelconque des revendications 1 à 4, **caractérisé en ce que** le retour à l'activation des anciennes données de souscription se produit lorsque le message n'est pas reçu dans une période qui est mis en marche au raison de la transmission de la notification à l'ancien opérateur.

6. Procédé selon l'une quelconque des revendications précédentes, **caractérisé en ce que** le module d'identification transmet une notification de confirmation à l'ancien opérateur lorsque, en raison de la détection du message de confirmation, une activation des nouvelles données de souscription est conservée.

7. Procédé selon l'une quelconque des revendications précédentes, **caractérisé en ce que** les nouvelles données de souscription sont transmises dans un message avec un critère d'authentification du nouvel opérateur associé aux nouvelles données de souscription au module d'identification, puis installées dans le module d'identification après la vérification de l'élément d'authentification.

8. Procédé selon l'une quelconque des revendications précédentes, dans lequel le module d'identification utilise une clé de chiffrement pour la vérification de l'élément d'authentification assigné à un opérateur, laquelle clé est sélectionné parmi une pluralité de clés secrètes enregistrées dans le module d'identification et assignées à divers opérateurs.

9. Module d'identification pour une utilisation dans un terminal de radiotéléphonie mobile qui peut être relié à un réseau de téléphonie mobile, le module d'identification étant configuré pour le changement des données de souscription actives et pour détecter au moins un événement prédéterminé, et le module d'identification étant configuré pour retourner automatiquement à l'activation d'anciennes données de souscription déjà activées avant la modification après une activation de nouvelles données de souscription, lorsque l'événement n'est pas détecté après l'activation des nouvelles données de souscription, **caractérisé en ce que** l'événement consiste à ne recevoir aucun message de confirmation avec une confirmation de la modification des données de souscription actives d'un ancien opérateur associé aux anciennes données de souscription, le message de confirmation comprenant au moins un élément d'authentification assigné à l'ancien opérateur, qui est vérifié par le module d'identification.
